# EUROPÄISCHE PATENTANMELDUNG

(11) **EP 1 302 685 A1**
(43) Veröffentlichungstag der Anmeldung: **16.04.2003**
(21) Anmeldenummer: 02022246.9
(22) Anmeldetag: 02.10.2002
(51) Int. Cl.: F16D 1/076, F16B 2/00

(54) **Toleranzring mit einer reibungserhöhenden Beschichtung**

(30) Priorität: 11.10.2001 DE 10150166
(71) Anmelder: Wacker-Chemie GmbH, 81737 München (DE)
(72) Erfinder: Haggenmüller, Wolfgang, 87435 Kempten (DE)
(74) Vertreter: Potten, Holger

(57) **Zusammenfassung**

Toleranzring, dadurch gekennzeichnet, daß er beidseitig mit einer reibungserhöhenden Beschichtung versehen ist.

## Beschreibung

Die Erfindung betrifft einen Toleranzring mit einer reibungserhöhenden Beschichtung für eine kraftschlüssige Welle-Nabe-Verbindung.

Lösbare Welle-Nabe-Verbindungen übertragen Kräfte und Drehmomente mittels Reibschluß auf jeweils zu fügende Bauteile (Fügepartner). Dabei hängt das maximal übertragbare Drehmoment vom Reibungskoeffizienten der Fügepartner und der Normalkraft ab. Um die Übertragungsfähigkeit der Verbindung zu steigern, sind verschiedene Maßnahmen bekannt. Hierzu zählen neben diversen direkten Beschichtungen auch Kleben, Toleranzhülsen und formschlüssige Verbindungselemente.

Derzeit wird eine direkte Beschichtung von Wellen oder Naben mit reibungserhöhenden Schichten (z.B. EKagrip®, Metall-Hartstoff, Ni-Diamant, Ni-Hartstoff, Plasma oder Phosphatierung) bereits erfolgreich eingesetzt. Allerdings erweist sich eine Direktbeschichtung als äußerst kostenintensiv und aufwendig.

Toleranzringe sind für reibschlüssige Welle-Nabe-Verbindungen altbewährte Verbindungselemente. Allerdings ist die Übertragungsfähigkeit dieser Konstruktionselemente aufgrund der durch die Grundwerkstoffe der Fügepartner vorgegebenen Kennwerte begrenzt.

Aufgabe der Erfindung war es, Toleranzringe zur Verfügung zu stellen, die es ermöglichen größere Kräfte als übliche Toleranzringe zwischen Fügepartnern, insbesondere Welle-Nabe-Verbindungen, zu übertragen.

Die Aufgabe wird gelöst durch einen Toleranzring, der beidseitig mit einer reibungserhöhenden Beschichtung versehen ist.

Ein erfindungsgemäßer Toleranzring unterscheidet sich von einem üblichen Toleranzring dadurch, daß er an seiner inneren und äußeren Oberfläche mit einer reibungserhöhenden Beschichtung versehen ist.

Bei der reibungserhöhenden Beschichtung kann es sich um eine beliebige reibungserhöhende Beschichtung handeln. Als Beispiele seien genannt die Beschichtung EKagrip®-, Metall-Hartstoff-, Ni-Diamant-, Ni-Hartstoff- oder Plasma-Beschichtung.

Vorzugsweise sind die innere und die äußeren Oberfläche des metallischen Toleranzrings mit einer Hartstoff/Metallschicht versehen wobei diese vorzugsweise mittels galvanotechnischer Verfahren, z.B. einer außenstromlosen Vernickelung erzeugt wird.

Vorzugsweise hat die reibungserhöhende Beschichtung jeweils eine Dicke von maximal 25 µm und enthält Hartstoffpartikel einer Größe bis maximal 30 µm.

Die reibungserhöhende Beschichtung auf dem erfindungsgemäßen Toleranzring entspricht in ihren Merkmalen vorzugsweise den aus EP 0961038 bekannten Beschichtungen.

Der erfindungsgemäße Toleranzring ermöglicht es, größte Drehmomente bei gleichbleibender Geometrie reproduzierbar zu übertragen. Unter Verwendung der beschichteten Toleranzringe können kraftschlüssige Welle-Nabe-Verbindungen auch an großen und komplizierten Bauteilen wirtschaftlich realisiert werden. Die Verbindung bleibt lösbar und vereinigt die Vorzüge aus Toleranzring und Beschichtung.

Die Auslegung der Verbindung, die Einbauart und die Montage erfolgen nach den üblichen Vorgaben für Toleranzringe. Die Übertragungsfähigkeit wird jedoch durch die Beschichtung wesentlich erhöht.

Der erfindungsgemäße Toleranzring wird hergestellt durch Beschichtung eines handelsüblichen Toleranzringes mittels eines für die jeweilige Beschichtung üblichen Verfahrens.

## Patentansprüche

1. Toleranzring, **dadurch gekennzeichnet, daß** er beidseitig mit einer reibungserhöhenden Beschichtung versehen ist.

2. Toleranzring nach Anspruch 1, **dadurch gekennzeichnet, daß** die Beschichtung ausgewählt ist aus der Gruppe EKagrip®-, Metall-Hartstoff-, Ni-Diamant-, Ni-Hartstoff- oder Plasma-Beschichtung.

3. Toleranzring nach Anspruch 2, **dadurch gekennzeichnet, daß** die Beschichtung eine Ni-Diamant-Beschichtung ist.
